# EUROPEAN PATENT APPLICATION

(11) **EP 3 435 644 A1**
(43) Date of publication of application: **30.01.2019**
(21) Application number: 18176254.3
(22) Date of filing: 06.06.2018
(51) Int. Cl.: H04M 1/725, H04W 12/08, H04L 29/06, H04W 4/021

(54) **SYSTEMS AND METHODS OF AUTOMATICALLY ADJUSTING THE PROFILE SETTINGS OR THE FUNCTIONALITY OF A PORTABLE DEVICE BASED ON ZONE INFORMATION OR EMERGENCY INFORMATION**

(30) Priority: 24.07.2017 US 201715657731
(71) Applicant: Honeywell International Inc., Morris Plains, NJ New Jersey 07950 (US)
(72) Inventor: RAMASWAMY, Prasanna Kumar, Morris Plains, NJ New Jersey 07950 (US); SHIVALINGAPPA, Veeranagegowda, Morris Plains, NJ New Jersey 07950 (US); KAMKAR, Nitin Nandakumar, Morris Plains, NJ New Jersey 07950 (US); BANERJEE, Abhijeet Kumar, Morris Plains, NJ New Jersey 07950 (US); PRASAD, Vinay, Morris Plains, NJ New Jersey 07950 (US)
(74) Representative: Houghton, Mark Phillip

(57) **Abstract**

Systems and methods of automatically adjusting the profile settings or the functionality of a portable device based on zone information or emergency information are provided. Some systems can include a portable device and a fixed device that is locally installed in or proximate to a zone of a region. The fixed device can transmit or broadcast a preferences signal, and responsive to receiving the preferences signal, the portable device can automatically adjust a profile setting or a functionality of the portable device based on the preferences signal.

## Description

### FIELD

The present invention relates to a portable device. More particularly, the present invention relates to systems and methods of automatically adjusting the profile settings or the functionality of the portable device based on zone information or emergency information.

### BACKGROUND

When a user enters a predetermined area, such as a restricted zone, a quiet zone, a learning zone, or the like, the user must manually adjust the profile settings or the functionality of a portable device he is carrying, such as a cellular phone, to a silent mode, an airplane mode, or off. However, it can be problematic if the user forgets to adjust the profile settings or the functionality of the portable device.

There are no known systems and methods to automatically adjust the profile settings or the functionality of the portable device, the status of the portable device, or the portable device's response to receiving a phone call based on who the user is, where the portable device is located, or when the portable device is located there. Furthermore, when an emergency, such as a fire, a high security threat, a natural disaster, or the like, occurs in a region, there are known systems and methods to identify the location of the portable device.

In view of the above, there is a continuing, ongoing need for improved systems and methods.

### BRIEF DESCRIPTION OF THE DRAWINGS

FIG. 1 is a block diagram of a system in accordance with disclosed embodiments;
FIG. 2 is a block diagram of a method in accordance with disclosed embodiments when a fixed device includes an access control reader; and
FIG. 3 is a block diagram of a method in accordance with disclosed embodiments when a fixed device includes a BLE device.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods of automatically adjusting the profile settings or the functionality of a portable device based on zone information or emergency information. For example, a fixed device locally installed in or proximate to a zone of a region can be connected with a server device and can transmit or broadcast zone information that can include, for example, a zone of the region in which the device is located, zone preferences, zone rules, or the like, or emergency information that can identify an emergency occurring in or proximate to the zone. For example, the zone can include a restricted area, a room, a desk, or the like in the region. In some embodiments, an administrator can define the zone information for the zone, and the zone preferences or the zone rules can include automatically setting the portable device to a silent mode, a vibrate mode, a do not disturb mode, or off, automatically setting the portable device to play a predetermined melody, or automatically responding to a phone call by disconnecting the phone call, sending a SMS message to a caller, redirecting the phone call to a colleague of the user, or answering the phone call and capturing audio or video via a local microphone or camera that can be sent to the server device for use in emergency situations.

When the portable device enters the zone, the portable device can receive the zone information broadcast from the fixed device and, responsive thereto, automatically adjust the profile settings based on the zone information. Additionally or alternatively, when the portable device enters the zone, the portable device can receive the emergency information broadcast from the fixed device and, responsive thereto, automatically transmit a location signal to the server device via the fixed device to identify location details of the portable device that could be useful for emergency responders rescuing the user of the portable device or automatically capture and transmit audio or video to the server device that could be useful for the emergency responders. For example, the server device can use the location details of the portable device to obtain an image or a video from a nearby camera. In this manner, systems and methods disclosed herein can adjust the profile settings or the functionality of the portable device based on who a user of the portable device is, where the portable device is located, or when the portable device is located there.

In some embodiments, the fixed device can include an access card reader that is installed proximate an entrance to the zone. In these embodiments, responsive to the user presenting a mobile access card displayed on the portable device to the access card reader to gain access to the zone and responsive to the user being authorized to access the zone, the access card reader can transmit a preferences signal to the portable device that includes the zone information or the emergency information for the zone. That is, the access card reader can write the zone information or the emergency information to the portable device when the user is authorized to access the zone. In these embodiments, the portable device can execute a mobile application running thereon that can display the mobile access card on a user interface device of the portable device, that can read the zone information or the emergency information from the preferences signal transmitted by the access card reader, and that can automatically adjust the profile settings of the portable device or automatically transmit the location signal accordingly.

In some embodiments, the fixed device can include a Bluetooth Low Energy (BLE) device that is installed in the zone, such as a beacon device, a Bluetooth device, or an loT device as would be understood by one of ordinary skill in the art. In these embodiments, the BLE device can periodically broadcast a preferences signal that includes the zone information or the emergency information for the zone, and upon entering the zone, the portable device can receive the preferences signal from the BLE device. In these embodiments, the portable device can execute the mobile application running thereon that can read the zone information or the emergency information from the preferences signal transmitted by the BLE device and that can automatically adjust the profile settings of the portable device or automatically transmit the location signal accordingly.

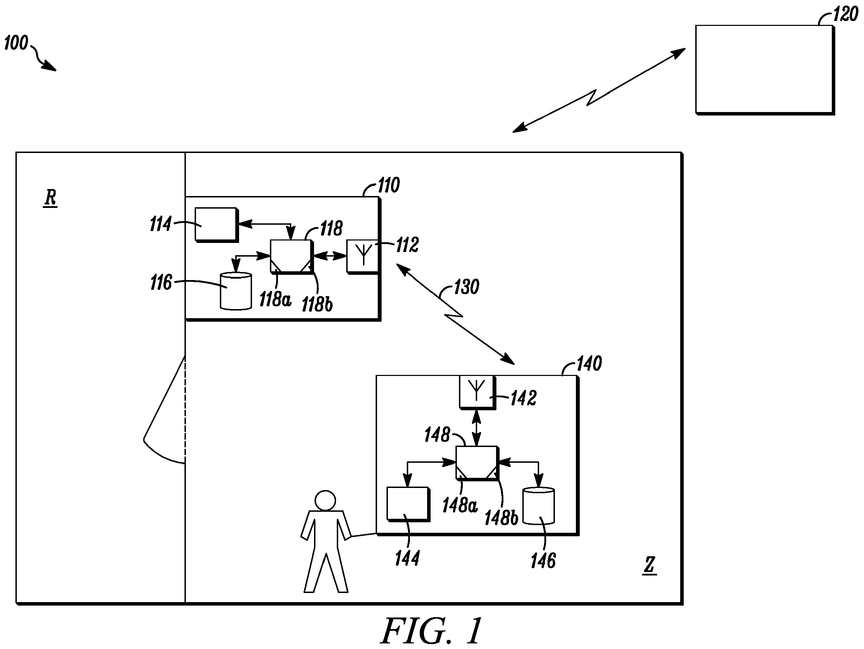

FIG. 1 is a block diagram of a system 100 in accordance with disclosed embodiments. As seen in FIG. 1, the system 100 can include the fixed device 110 that is locally installed in or proximate to the zone Z of the region R and that is connected with the server device 120. The fixed device 110 can transmit or broadcast the preferences signal 130, and the portable device 140 can receive the preferences signal from the fixed device 110 immediately prior to, as, or after the portable device 140 enters the zone Z.

As seen in FIG. 1, each of the fixed device 110 and the portable device 140 can include a respective transceiver device 112, 142, a respective user interface device, 114, 144, and a respective memory device 116, 146, each of which can be in communication with respective control circuitry 118, 148, a respective programmable processor 118a, 148a, and respective executable control software 118b, 148b as would be understood by one of ordinary skill in the art. Each of the respective executable control software 118b, 148b can be stored on a respective transitory or non-transitory computer readable medium, including, but not limited to local computer memory, RAM, optical storage media, magnetic storage media, flash memory, and the like.

In some embodiments, some or all of the respective control circuitry, 118, 148, the respective programmable processors, 118a, 148a, and the respective executable control software 118b, 148b can execute and control at least some of the methods disclosed herein. For example, the memory device 116 can include the zone information or the emergency information, the transceiver device 112 can transmit or broadcast the preferences signal 130 that includes the zone information or the emergency information retrieved from the memory device 116 or received from the server device 120, the memory device 146 can include the profile settings for the portable device 140, and responsive to the transceiver device 142 receiving the preferences signal 130 from the fixed device 110, the control circuitry 148, the programmable processor 148a, and the executable control software 148b can update the profile settings in the memory device 146 with the zone information in the preferences signal 130 or automatically instruct the transceiver device 142 to transmit the location signal to the server device via the fixed device 110 to identify the location details of the portable device 140. In some embodiments, the control circuitry 148, the programmable processor 148a, and the executable control software 148b can identify the location details of the portable device 140 via information in the preferences signal or via a GPS device local to the portable device 140.

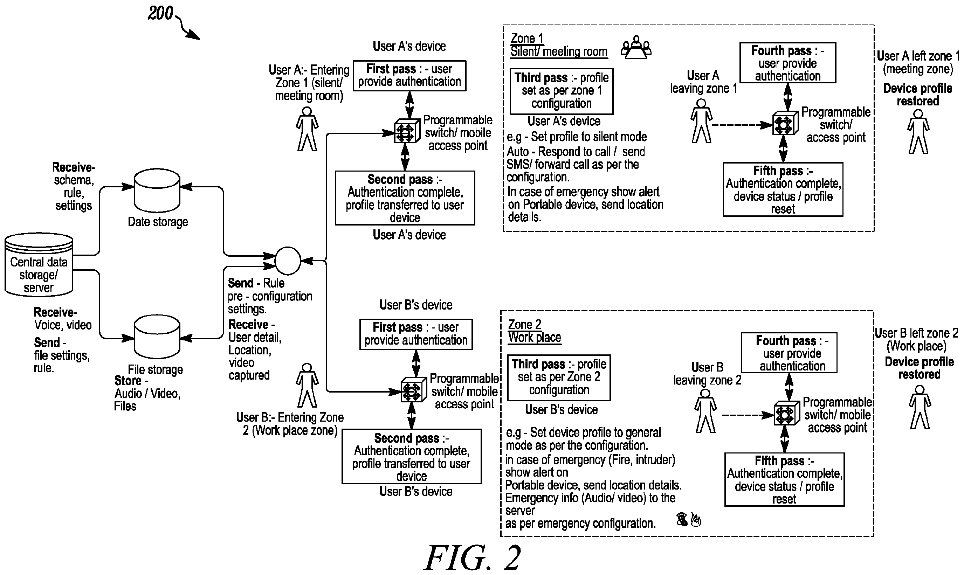

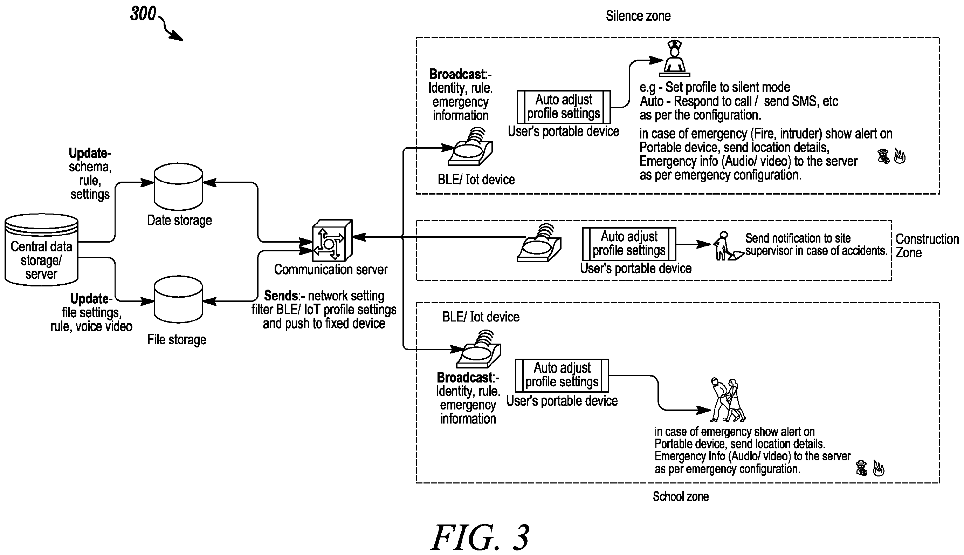

FIG. 2 is a block diagram of a method 200 in accordance with disclosed embodiments when the fixed device includes an access control reader, and FIG. 3 is a block diagram of a method 300 in accordance with disclosed embodiments when the fixed device includes a BLE device. As seen in each of FIG. 2 and FIG. 3 and in accordance with the systems and methods disclosed herein, the portable device can automatically adjust the profile settings or the functionality of the portable device responsive to receiving a preferences signal from the fixed device.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.
The numbered paragraphs below form part of the disclosure:
1. A method comprising:
   a portable device displaying a mobile access card on a user interface device of the portable device;
   the portable device presenting the mobile access card to an access card reader proximate to an entrance to a zone;
   when the mobile access card is associated with a user authorized to access the zone, the portable device receiving a preferences signal transmitted by the access card reader; and
   the portable device automatically adjusting a profile setting or a functionality of the portable device based on the preferences signal.
2. The method of 1 wherein the preferences signal includes zone information that identifies a zone preference for the zone, and wherein the portable device automatically adjusts the profile setting or the functionality of the portable device to match the zone preference.
3. The method of 2 wherein the zone preference includes a silent mode, a vibrate mode, a do not disturb mode, or an off mode of the portable device.
4. The method of 2 wherein the zone preference includes automatically responding to a phone call by disconnecting the phone call, sending a SMS message to a caller, redirecting the phone call, or answering the phone call, capturing audio or video via a local microphone or camera, and sending the audio or the video to a server device.
5. The method of 1 wherein the preferences signal includes emergency information that identifies an emergency occurring in or proximate to the zone, and wherein the portable device automatically adjusts the functionality of the portable device by automatically transmitting a location signal to the access card reader that identifies location details of the portable device.
6. The method of 1 wherein the preferences signal writes the zone information or the emergency information to the portable device.
7. A method comprising:
   a portable device entering a zone in which a Bluetooth Low Energy (BLE) device is installed;
   the portable device receiving a preferences signal periodically broadcast by the BLE device; and
   the portable device automatically adjusting a profile setting or a functionality of the portable device based on the preferences signal.
8. The method of 7 wherein the BLE device is an loT device.
9. The method of 7 wherein the preferences signal includes zone information that identifies a zone preference for the zone, and wherein the portable device automatically adjusts the profile setting or the functionality of the portable device to match the zone preference.
10. The method of 9 wherein the zone preference includes a silent mode, a vibrate mode, a do not disturb mode, or an off mode of the portable device.
11. The method of 9 wherein the zone preference includes automatically responding to a phone call by disconnecting the phone call, sending a SMS message to a caller, redirecting the phone call, or answering the phone call, capturing audio or video via a local microphone or camera, and sending the audio or the video to a server device.
12. The method of 7 wherein the preferences signal includes emergency information that identifies an emergency occurring in or proximate to the zone, and wherein the portable device automatically adjusts the functionality of the portable device by automatically transmitting a location signal to the access card reader that identifies location details of the portable device.
13. The method of 7 wherein the preferences signal writes the zone information or the emergency information to the portable device.
14. A system comprising:
   a fixed device that is locally installed in or proximate to a zone of a region; and
   a portable device,
   wherein the fixed device transmits or broadcasts a preferences signal, and
   wherein, responsive to receiving the preferences signal, the portable device automatically adjusts a profile setting or a functionality of the portable device based on the preferences signal.
15. The system of 14 wherein the fixed device retrieves zone information or emergency information for the zone from a memory device of the fixed device and transmits or broadcasts the zone information or the emergency information in the preferences signal.
16. The system of 14 wherein the fixed device is in communication with a remote server device, receives zone information or emergency information for the zone from the remote server device, and transmits or broadcasts the zone information or the emergency information in the preferences signal.
17. The system of 14 wherein the fixed device includes an access card reader.
18. The system of 17 wherein the access card reader transmits the preferences signal responsive to reading a mobile access card displayed on a user interface device of the portable device and determining that the mobile access card is associated with a user authorized to access the zone.
19. The system of 14 wherein the fixed device includes a BLE device or an loT device.
20. The system of 19 wherein the BLE device or the loT device periodically broadcasts the preferences signal in the zone.

## Claims

1. A method comprising:
a portable device displaying a mobile access card on a user interface device of the portable device;
the portable device presenting the mobile access card to an access card reader proximate to an entrance to a zone;
when the mobile access card is associated with a user authorized to access the zone, the portable device receiving a preferences signal transmitted by the access card reader; and
the portable device automatically adjusting a profile setting or a functionality of the portable device based on the preferences signal.

2. The method of claim 1 wherein the preferences signal includes zone information that identifies a zone preference for the zone, and wherein the portable device automatically adjusts the profile setting or the functionality of the portable device to match the zone preference.

3. The method of claim 2 wherein the zone preference includes a silent mode, a vibrate mode, a do not disturb mode, or an off mode of the portable device.

4. The method of claim 2 wherein the zone preference includes automatically responding to a phone call by disconnecting the phone call, sending a SMS message to a caller, redirecting the phone call, or answering the phone call, capturing audio or video via a local microphone or camera, and sending the audio or the video to a server device.

5. The method of claim 1 wherein the preferences signal includes emergency information that identifies an emergency occurring in or proximate to the zone, and wherein the portable device automatically adjusts the functionality of the portable device by automatically transmitting a location signal to the access card reader that identifies location details of the portable device.

6. The method of claim 1 wherein the preferences signal writes the zone information or the emergency information to the portable device.

7. A method comprising:
a portable device entering a zone in which a Bluetooth Low Energy (BLE) device is installed;
the portable device receiving a preferences signal periodically broadcast by the BLE device; and
the portable device automatically adjusting a profile setting or a functionality of the portable device based on the preferences signal.

8. The method of claim 7 wherein the BLE device is an loT device.

9. The method of claim 7 wherein the preferences signal includes zone information that identifies a zone preference for the zone, and wherein the portable device automatically adjusts the profile setting or the functionality of the portable device to match the zone preference.

10. The method of claim 9 wherein the zone preference includes a silent mode, a vibrate mode, a do not disturb mode, or an off mode of the portable device.

11. The method of claim 9 wherein the zone preference includes automatically responding to a phone call by disconnecting the phone call, sending a SMS message to a caller, redirecting the phone call, or answering the phone call, capturing audio or video via a local microphone or camera, and sending the audio or the video to a server device.

12. The method of claim 7 wherein the preferences signal includes emergency information that identifies an emergency occurring in or proximate to the zone, and wherein the portable device automatically adjusts the functionality of the portable device by automatically transmitting a location signal to the access card reader that identifies location details of the portable device.

13. The method of claim 7 wherein the preferences signal writes the zone information or the emergency information to the portable device.

14. A system comprising:
a fixed device that is locally installed in or proximate to a zone of a region; and
a portable device,
wherein the fixed device transmits or broadcasts a preferences signal, and
wherein, responsive to receiving the preferences signal, the portable device automatically adjusts a profile setting or a functionality of the portable device based on the preferences signal.

15. The system of claim 14 wherein the fixed device retrieves zone information or emergency information for the zone from a memory device of the fixed device and transmits or broadcasts the zone information or the emergency information in the preferences signal.
